# EUROPEAN PATENT SPECIFICATION

(11) **EP 3 877 950 B1**
(45) Date of publication and mention of the grant of the patent: **24.09.2025**
(21) Application number: 19820840.7
(22) Date of filing: 05.11.2019
(51) Int. Cl.: G06T 7/254, G06T 7/00, G01J 5/00, G01J 5/02

(54) **REPEAT THERMOGRAPHY**
WIEDERHOLUNGSTHERMOGRAFIE
THERMOGRAPHIE À RÉPÉTITION

(30) Priority: 05.11.2018 GB 201818040
(43) Date of publication of application: 15.09.2021
(73) Proprietor: THERMAFY GROUP LTD, Kelso Scotland TD5 7JD (GB)
(72) Inventor: PICKFORD, Amanda, Jedburgh TD8 6RR (GB)
(74) Representative: Adams, James
(86) International application number: PCT/GB2019/053132
(87) International publication number: WO 2020/095039

(56) References cited:
- US-A1- 2013 155 249
- US-A1- 2013 162 796
- US-B1- 7 732 768

## Description

The present invention relates to a method of repeat thermography, a thermographic imaging camera apparatus and an associated computer program product, useful for example in surveys of heating systems and veterinary and medical thermography.

### Background Art

Thermographic surveys can involve repeat thermography of objects. For example, a first thermographic survey of domestic heating system can identify problems with the heating system, such as blocked radiators. This can indicate that a cleaning cycle is needed, such as a "power flush". In order to confirm that the power flush has been successful and blocked radiators have been unblocked and are now functioning correctly, a second thermographic survey is useful. However, it is a problem that all rooms and radiators are not correctly surveyed in the follow-on surveys, after the first survey. It is a problem that surveys cannot be compared radiator by radiator accurately enough. It is also a problem that surveys cannot be compared room by room accurately enough. These problems arise because of inaccurate alignment of thermographic images in the first survey with thermographic images of the same objects in subsequent surveys. This makes comparison of the thermographic images at different points in time inaccurate. Accurate alignment of thermographic images in repeat thermography conventionally relies on a user finding the point of view for second and subsequent thermographic images of an object by trial and error with limited guidance. As well as poor alignment of individual thermal images, objects, such as radiators, and places, such as rooms, can be missed.

In veterinary and medical thermography, which involves a thermographic survey of an animal or a person, inaccuracy in alignment of thermographic images, for example in distance from the subject, can result in missed or inaccurate diagnosis of disease.

US 7732768 B1 discloses a thermographic imager with user guidance to align a live image with a previous image. The system is applied e.g. to the temporal monitoring facades and furnaces. The comparison may involve an image overlay. Thermographic and/or visual images are compared to guide the camera user.

US 2013/0155249 A1 discloses thermal and visual imaging for maintenance inspections. The user is guided to return to a known camera pose to take follow-up images, e.g. of furnaces. The images can be taken automatically according to alignment. The inspection can be performed on overlaid images and difference images.

US 2013/0162796 A1 discloses the monitoring of skin diseases in human and animal bodies from thermal image sequences. The user is guided to take follow-up images from approximately the same viewpoint, but imaging can also be triggered automatically upon alignment.

### Summary of invention

It is desirable to provide a method of repeat thermography that overcomes at least some of the of the above-identified problems.

The present invention is defined in independent claims 1, 10 and 11.

### Brief description of drawings

Embodiments of the present invention will now be described, by way of example only, with reference to the drawings, in which:
Figure 1 illustrates, in schematic form, capturing visible and thermographic images of a radiator.
Figure 2 illustrates, in schematic form, a first survey of a domestic heating system with a path through a house with four image capture points.
Figure 3 illustrates, in schematic form, recorded visible and thermographic images of radiators and point-of-view data for a first survey, in accordance with an embodiment of the present invention.
Figure 4 illustrates, in schematic form, guiding alignment of a thermographic camera, in accordance with an embodiment of the present invention.
Figure 5 illustrates, in schematic form, determining that a thermographic camera is aligned to a point of view, in accordance with an embodiment of the present invention.
Figure 6 illustrates, in schematic form, a second survey of a domestic heating system.
Figure 7 illustrates, in schematic form, recorded visible and thermographic images and point-of-view data for a second survey, in accordance with an embodiment of the present invention.
Figure 8 is a flowchart of a method according to an embodiment of the present invention.
Figure 9 illustrates, in schematic form, a mobile device incorporating a thermographic camera and software, in accordance with an embodiment of the present invention.
Figure 10 illustrates, in schematic form, capturing visible and thermographic images of a dog.
Figure 11 illustrates, in schematic form, a first survey of a dog with two image capture points.
Figures 12 and 13 illustrate, in schematic form, recorded visible and thermographic images of two sides of a dog and point-of-view data for a first survey, in accordance with an embodiment of the present invention.
Figure 14 illustrates, in schematic form, guiding alignment of a thermographic camera, in accordance with an embodiment of the present invention.
Figure 15 illustrates, in schematic form, determining that a thermographic camera is aligned to a point of view, in accordance with an embodiment of the present invention.
Figure 16 illustrates, in schematic form, a second survey of a dog.
Figures 17a and 17b illustrate, in schematic form, recorded visible and thermographic images and point-of-view data of two sides of a dog for a second survey, in accordance with an embodiment of the present invention.
Figure 18 is a flowchart of a method according to an embodiment of the present invention.
Figure 19 illustrates, in schematic form, a mobile device incorporating a thermographic camera and software, in accordance with an embodiment of the present invention.

### Description of embodiments

In this description, the term thermographic is equivalent to thermal imaging, such as infrared (IR) thermal imaging. A thermographic camera is also known as a thermal imaging camera. A thermographic camera apparatus may be, for example, a mobile phone with a thermographic camera attachment, or a mobile phone with an integrated thermographic sensor, or a device with a hyperspectral imaging sensor that can capture visible and thermographic images simultaneously.

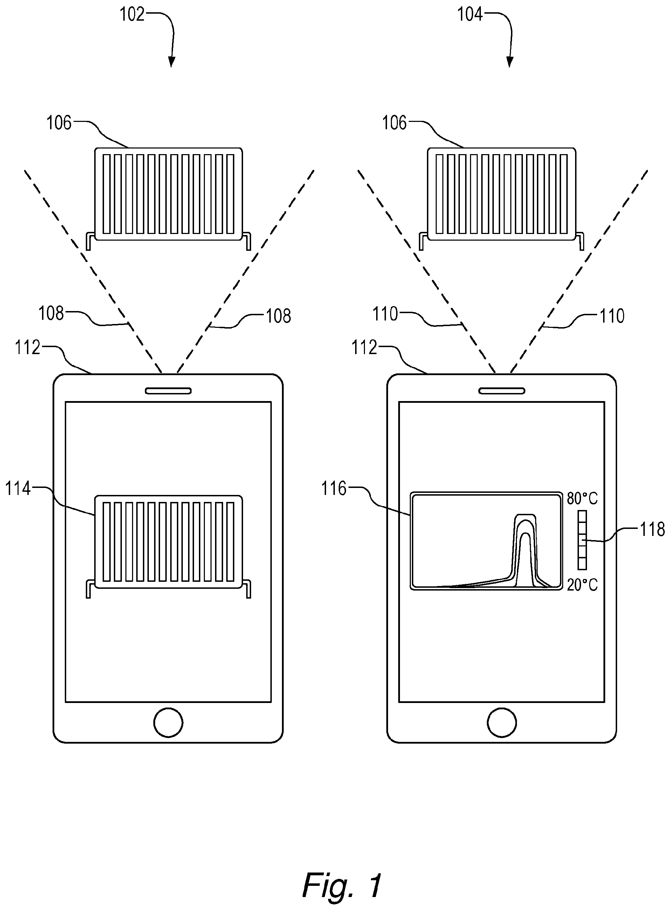

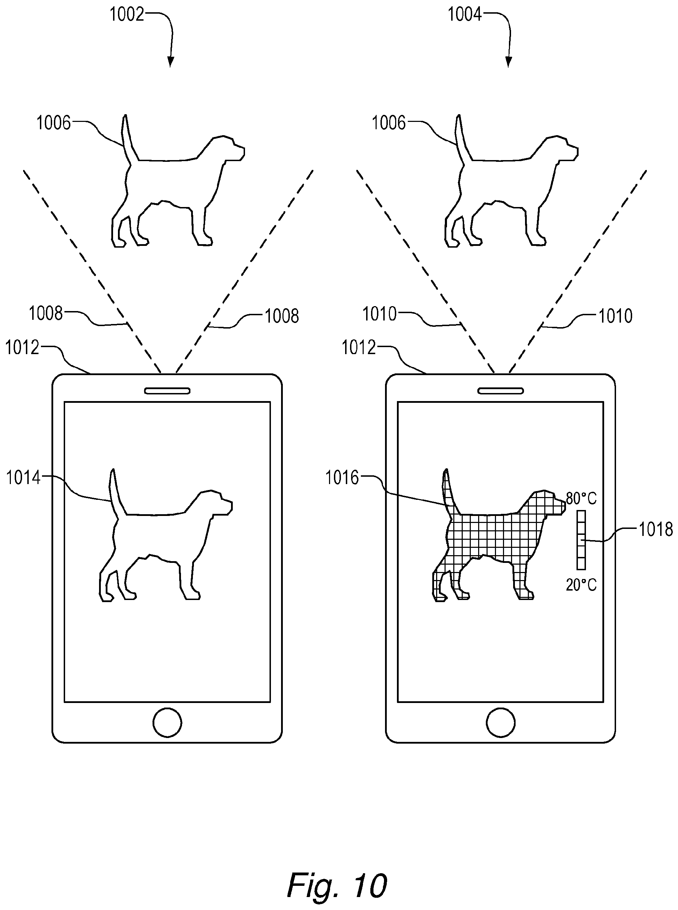

Embodiments of the present invention, for example as described with reference to Figure 1 to 9, can guide an engineer performing a thermographic survey to follow the same path through a property such as a building. Embodiments, for example as described with reference to Figure 10 to 19, can guide a user or patient to use the same points of view as a veterinary or medical practitioner who has performed the first survey. This results in more accurate comparisons between surveys.

A path may include a translation or rotation of a thermographic camera or the object being imaged, so as to change the point of view of the thermographic camera. In the case of objects that are static with respect to the Earth, then the path may be for example a set of coordinates in an Earth-based coordinate frame describing a change in the point of view. In the case of moveable objects, the path may be for example a set of data values specifying transformations or instructions (such as textual or verbal instructions) representing a change in the point of view.

Figure 1 illustrates, in schematic form, capturing visible and thermographic images of a radiator.

At the left side of Figure 1, the capture of a first visual image is shown 102. A thermographic apparatus, here a mobile device 112, incorporating a thermographic camera is positioned with a radiator 106 in its field of view 108. The real-time visible view of the radiator is rendered on the screen. The user presses a shutter button to capture the first visual image 114. At the right-hand side of Figure 1, the capture of a first thermographic image is shown 104. The mobile device 112 remains positioned with the radiator 106 in its field of view 110. The real-time thermographic view of the radiator may be rendered on the screen, optionally in superposition with the visible image. When the user presses the shutter button it also triggers capture of the first thermographic image 116. This shows a contour plot showing a blockage in the radiator. The optional temperature scale 118 is also rendered on the screen and may be incorporated into the thermal image. The visible and thermal images may be captured simultaneously or immediately in succession, in any order.

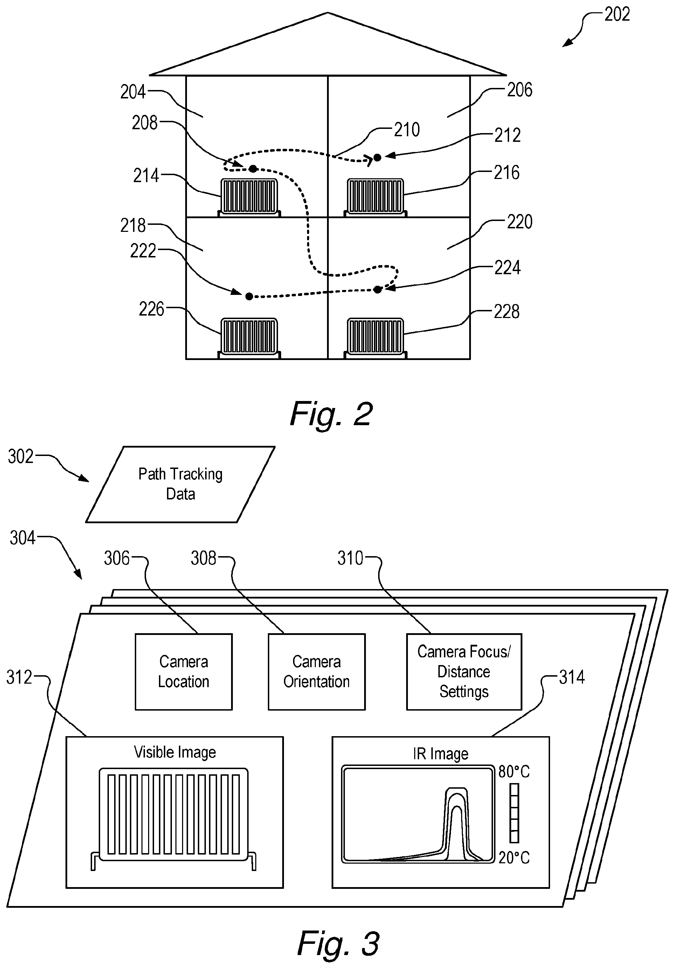

Figure 2 illustrates, in schematic form, a first survey 202 of a domestic heating system with a path through a house with four image capture points. The house has four rooms 204, 206, 218 and 220. All in each room there is a radiator 214, 216, 226 and 228. The path 210 of a first survey through the house is shown with four image capture points 222, 224, 208 and 212. In this example, the object is a heating system component, i.e. a radiator. Embodiments are not limited to such objects, for example, the embodiments may be used with any industrial asset. Embodiments may be used with any object that has a meaningful thermographic signature, such as a person or animal or part of a person (such as a breast) or animal.

Figure 3 illustrates, in schematic form, recorded visible and thermographic images of radiators and point-of-view data, in accordance with an embodiment of the present invention. Path tracking data 302, is a type of point-of-view data, such as that recorded along the path 210. It is a sequence of coordinates in three-dimensional space. Data record 304 is the data recorded at four capture points. At each capture point, images and point-of-view data are recorded. Here, a visible image 312 of the radiator is shown alongside the thermographic image 314, with the contours (shown) and colours (not shown) showing a blockage. In this example, there is a colder region of the radiator near the bottom right of the radiator, caused by sludge build up in the radiator. Examples of point-of-view data are the thermographic camera location data 306, thermographic camera orientation data 308 and thermographic camera distance and/or focus settings 310. The distance and/or focus settings may be measured for example using contrast, phase or range finding methods. The point-of-view data in this description may relate to the visible camera, with the thermographic camera being attached to and offset from the visible camera device. Then because the offset remains constant (or can be corrected for) between surveys, the thermographic camera will be guided to the same point of view.

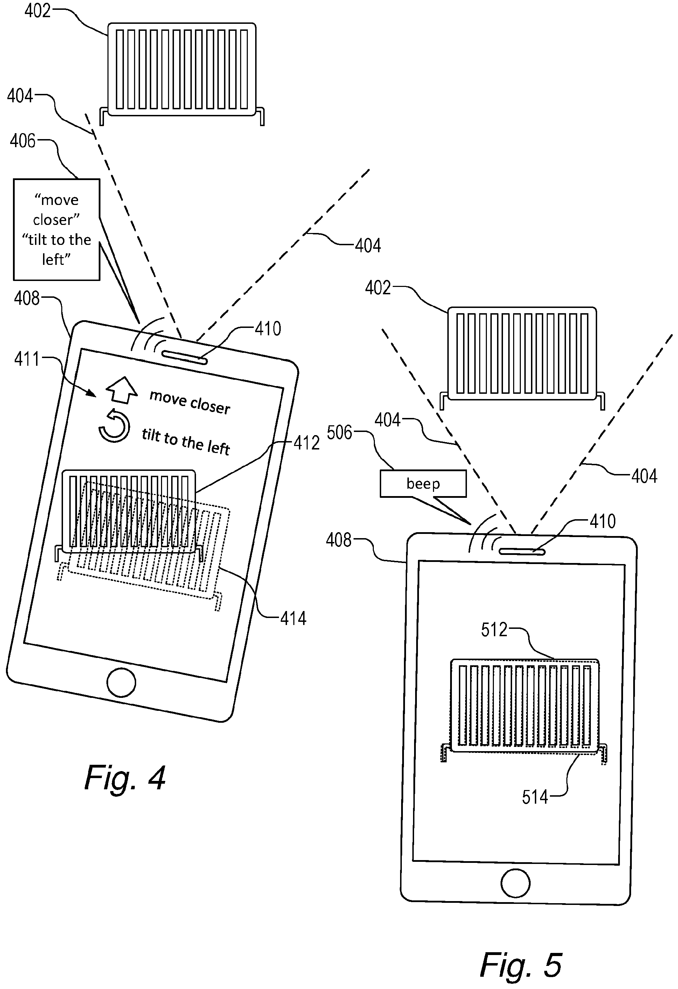

Figure 4 illustrates, in schematic form, guiding alignment of a thermographic camera, in accordance with an embodiment of the present invention. A radiator 402 is shown in the field of view 404 of a mobile device 408 equipped with a thermographic camera. On the display of the mobile device 408, a real-time image of the radiator 412 is rendered overlaid on the first visible image 414 that was captured and recorded in the first survey (312 in Figure 3). In this description, an image may rendered overlaid in different ways. Images may be combined together with different levels of transparency, one on top of another and in different orders, so long as the overlaying shows misalignment.

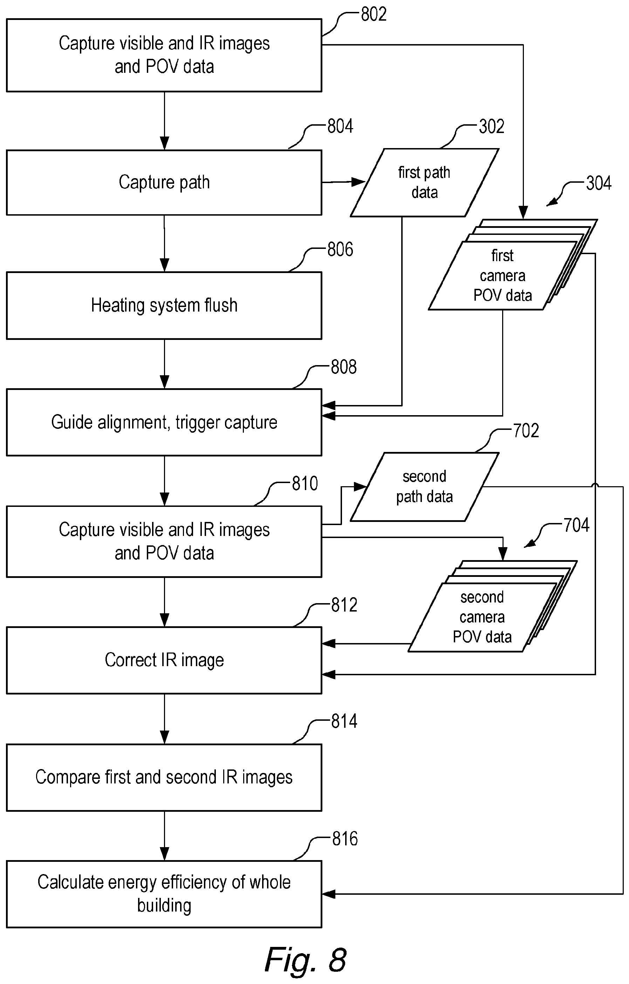

Guidance of alignment of the thermographic camera towards the first point of view (at which the first thermal and visible images were captured) is provided. The method is described with reference to Figure 8. In this example, a loudspeaker 410 on the mobile device 408 is used to output auditory guidance 406 to the thermographic camera user. In this example the guidance is "move closer" and "tilt to the left". Furthermore, visual guidance 411 is provided on the display of the mobile device 408. In this example the visual guidance is textual "move closer" and "tilt to the left" and graphical with respective arrow icons.

Figure 5 illustrates, in schematic form, determining that a thermographic camera is aligned to a point of view, in accordance with an embodiment of the present invention. With reference to Figure 5, the situation is illustrated when the user has followed the guidance and achieved better alignment of the point of view of the thermographic camera to the corresponding point of view from the first survey. Reference numerals in Figure 5 which are the same as those in Figure 4 correspond to the same features. When alignment is good enough, as determined by a processor, a second thermographic image is captured and stored, along with a visible image and point-of-view data. Alternatively, or additionally, the user may determine that the alignment is good enough and may trigger the capture of the second thermographic image. The user may determine this by looking at the display. On the display, a real-time image of the radiator 402 is rendered 512 overlaid on the first visible image 514 that was captured and recorded in the first survey (312 in Figure 3). In Figure 5, the alignment is more accurate than in Figure 4. Again, the detailed method is described with reference to Figure 8. In this example, the loudspeaker 410 on the mobile device 408 is used to output auditory confirmation 506 of accurate alignment (here with a "beep") to the thermographic camera user. Alternatively, (not shown) a visual indication or a vibration of the mobile device may be used as confirmation of accurate alignment.

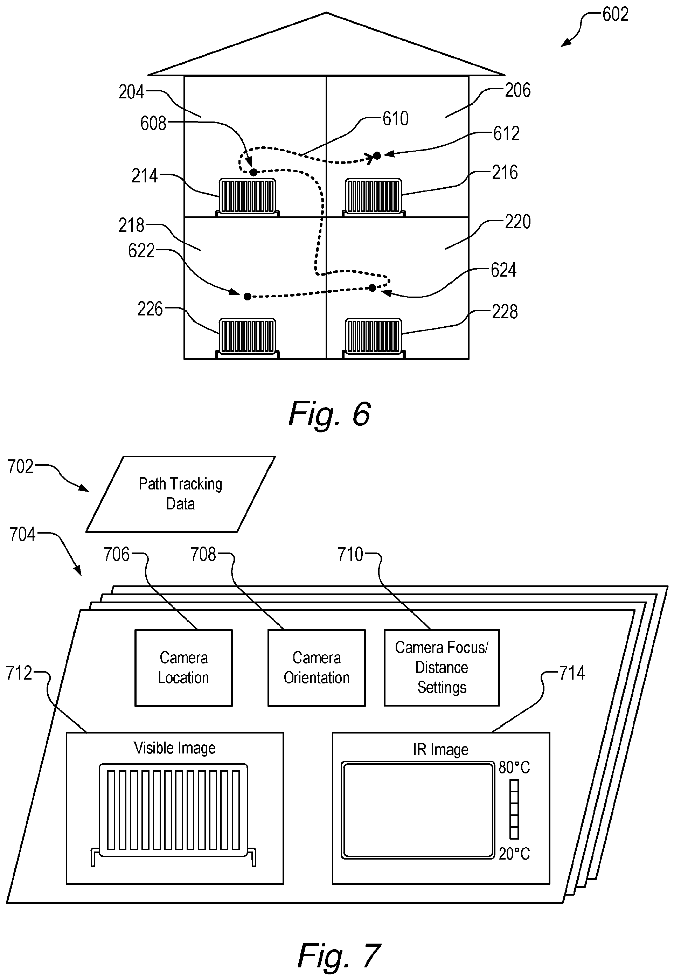

Figure 6 illustrates, in schematic form, a second survey 602 of a domestic heating system. The house of the first survey of Figure 2 has four rooms 204, 206, 218 and 220. In each room there is a radiator 214, 216, 226 and 228. The path 610 of the second survey through the house is shown with four image capture points 622, 624, 608 and 612. In the second survey, the user of the thermographic camera is guided to capture thermographic images at these capture points, with points of view aligned to the points of view of the capture points in the first survey.

Figure 7 illustrates, in schematic form, recorded visible and thermographic images and point-of-view data of the second, or subsequent, survey. Path tracking data 702, is a type of point-of-view data, such as that recorded along the path 610. It is a sequence of coordinates in three-dimensional space. Data record 704 is the data recorded at four capture points. At each capture point, images and point-of-view data are recorded. Here, a visible image 712 of the radiator is shown alongside the thermographic image 714 with the absence of contours within the body of the radiator showing that the blockage has been removed (for example by a power flush) in between the first and second surveys. Examples of point-of-view data are the thermographic camera location data 706, thermographic camera orientation data 708 and thermographic camera distance and/or focus settings 710.

Figure 8 is a flowchart of a method of repeat thermography according to an embodiment of the present invention. Reference is also made to features discussed in previous figures. In this example a survey of a domestic heating system is performed.

Step 802 involves capturing and recording a first thermographic image 314 of an object 226 from a first point of view 222 relative to the object 226. In this example, the objects comprise radiators, which are components of a heating system.

Step 802 also involves capturing and recording first point-of-view data 304 corresponding to the first point of view 222. The point-of-view data may comprise camera location data 306 representing location of a thermographic camera when used to capture the respective thermographic image. The point-of-view data may comprise camera orientation data 308 representing orientation of a thermographic camera when used to capture the respective thermographic image. The point-of-view data may comprise camera distance and/or focus data 310 representing for example subject distance or focus settings of a thermographic camera when used to capture the respective thermographic image.

The step 802 may be repeated at a plurality of points of view along a first path 210 during a first survey, as shown in Figure 2. In this case, step 804 involves capturing and recording first point-of-view path data 302 representing the first path.

After the first survey, at step 806, the heating system is power flushed, to clear blockages.

Step 808 involves guiding alignment of a thermographic camera towards the first point of view using the recorded first point-of-view data 302 and/or 304. It may be the same or a different thermographic camera. Step 808 also involves determining differences between real-time point-of-view data and the recorded first point-of-view data and using the differences to determine guidance indications output to a thermographic image camera user. For example, real-time point-of-view data derived from GPS and phone position/acceleration/gravity sensors can be used for absolute and dead-reckoning calculations. The course from the current position to the desired point of view can be determined automatically and indications used to communicate that to the user, who is carrying the thermographic camera apparatus. The user can then follow the guidance resulting in an improvement of the alignment of the first and second thermal images.

Guidance indications may be, for example, auditory guidance 406, such as "move closer" or "tilt to the left", or visual guidance 411, such as textual or graphical indications. Step 808 may also involve rendering on a display a representation of an overlay of a real-time visible image 412 and a first visible image 414 (corresponding to visible image 312) of the object 226 (and 402) captured from the first point of view 222.

Step 808 may involve automatically comparing a real-time visible image with a first visible image 312 of the object 226 captured from the first point of view 222.

Step 810 involves capturing a second thermographic image of the object. Step 810 further comprises capturing and recording 810 second point-of-view data 702, 704 corresponding to a second point of view at which the second thermographic image is captured.

This step 810 of capturing a second thermographic image of the object may be performed automatically (in step 808 or step 810) based on determining that a thermographic camera is aligned to the first point of view by comparing real-time point-of-view data and the recorded first point-of-view data.

Additionally, or alternatively, the step 810 of capturing a second thermographic image of the object is performed automatically based on determining that a thermographic camera is aligned to the first point of view by comparing real-time thermographic images and the first thermographic image 314.

Additionally, or alternatively, the step 810 of capturing a second thermographic image of the object is performed automatically based on determining that the camera is aligned to the first point of view by comparing real-time visible images and a visible image 312 of the object 226 captured from the first point of view 222.

Additionally, or alternatively, the step 810 of capturing a second thermographic image of the object comprises capturing a burst (rapid still image sequence or video sequence) of thermographic images and capturing burst point-of-view data, corresponding to the point of view at which the burst of thermographic images are captured, and selecting or determining the second thermographic image from the burst of thermographic images by comparing the burst point-of-view data and the recorded first point-of-view data.

Additionally, or alternatively, the step 810 of capturing a second thermographic image of the object comprises capturing a burst of thermographic images and selecting or determining the second thermographic image from the burst of thermographic images by comparing burst thermographic images and the first thermographic image 314.

Additionally, or alternatively, the step 810 of capturing a second thermographic image of the object comprises capturing a burst of thermographic and visible images and selecting or determining the second thermographic image from the burst of thermographic images by comparing burst visible images and a visible image 312 of the object 226 captured from the first point of view 222.

Additionally, or alternatively, the recorded first point-of-view data 302, 306, 308, 310 may be used to set thermographic image camera settings to capture the second thermographic image. For example, the camera orientation data 308 may be used to set the image rotation setting of the thermographic camera. As another example, the camera distance and/or focus data 310 may be used to fix the focus setting of the thermographic camera.

Steps 812 and 814 involves determining a difference between the first 314 and second 714 thermographic images. In this example, this involves at step 814 comparing first ("before") 314 and second ("after") 714 thermographic images. The step of determining a difference between the first 314 and second 714 thermographic images may be corrected, at step 812, using the first 302, 306, 308, 310 and second 702, 706, 708, 710 point-of-view data. For example, the intensity of the first or second thermographic image may be normalised. As a further example, the first or second thermographic image may be transformed in order to more easily compare them.

The method may further comprise repeating the steps of guiding alignment 808, capturing 810 a second thermographic image and determining 814 a difference between the first and second thermographic images for each of the plurality of points of view during a second survey (described with reference to Figure 6).

Step 816 involves calculating an energy efficiency of the heating system and/or a building based on the determined (at step 814) difference between the first and second thermographic images corresponding to the plurality of points of view. This uses first and second path point-of-view data to confirm that all radiators have been measured.

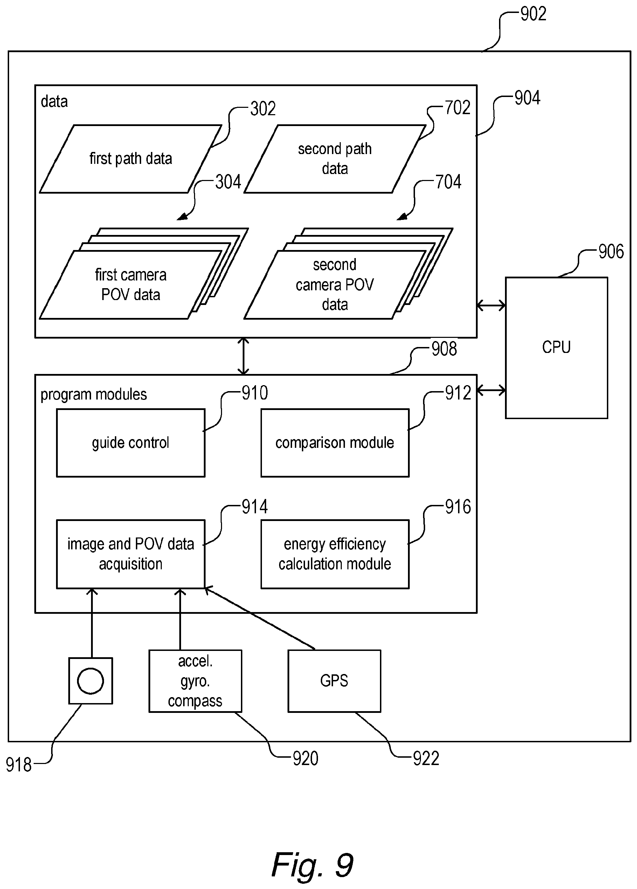

Figure 9 illustrates, in schematic form, a mobile device incorporating a thermographic camera and software, in accordance with an embodiment of the present invention. Embodiments may be implemented as a computer program product, such as software, comprising machine readable instructions for causing a thermographic imaging camera apparatus to perform the steps of a method described with reference to Figures 1 to 8. With reference to Figure 9, reference numerals which are the same as in previous figures relate to the same features. In the mobile device 902, data memory 904 stores point-of-view data. This includes recorded first 302 and second 702 path data. It also stores recorded first 304 and second 704 camera point-of-view data. Program memory 908 stores program modules which are executed on the central processing unit (CPU) 906. The guide control module 910 when executed implements step 808 of Figure 8. The comparison module 912 when executed implements step 814 of Figure 8. The image and point-of-view data acquisition module 914 when executed implement the steps in Figure 8 related to capturing images and point-of-view data 802, 804 and 810.

Module 914 captures images from and receives inputs from the mobile device accelerometers, gyroscope and compass 920 as well as the integrated GPS (global positioning system) unit 922. The energy efficiency calculation module 916 when executed implements step 816 of Figure 8.

Figure 10 illustrates, in schematic form, capturing visible and thermographic images of a dog.

At the left side of Figure 10, the capture of a first visual image is shown 1002. A thermographic apparatus, here a mobile device 1012, incorporating a thermographic camera is positioned with a dog 1006 in its field of view 1008. The real-time visible view of the dog is rendered on the screen. The user presses a shutter button to capture the first visual image 1014. At the right-hand side of Figure 10, the capture of a first thermographic image is shown 1004. The mobile device 1012 remains positioned with the dog 1006 in its field of view 1010. The real-time thermographic view of the dog may be rendered on the screen, optionally in superposition with the visible image. When the user presses the shutter button it also triggers capture of the first thermographic image 1016. This may be a colour contour plot or thermogram of the dog. The optional temperature scale 1018 is also rendered on the screen and may be incorporated into the thermal image. The visible and thermal images may be captured simultaneously or immediately in succession, in any order.

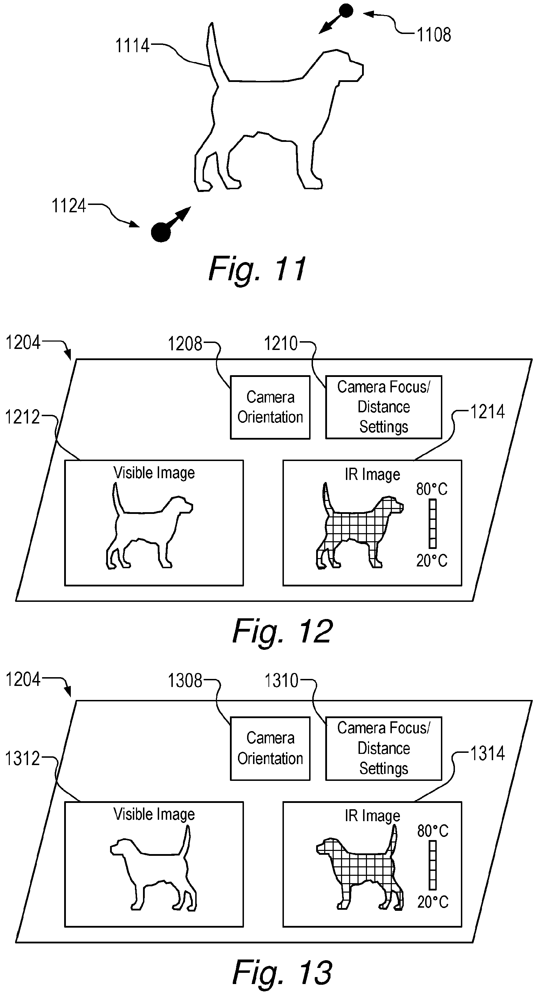

Figure 11 illustrates, in schematic form, a first survey of a dog with two image capture points. A first survey of the dog 1114 is shown with two image capture points 1108 and 1124. In this example, the object is a mammal, i.e. a dog. Embodiments are not limited to such objects, for example, the embodiments may be used with any type of animal or plant. Embodiments may be used with any object that has a meaningful thermographic signature, such as a person or animal or part of a person (such as a breast) or animal.

Figures 12 and 13 illustrate, in schematic form, recorded visible and thermographic images of two sides of a dog and point-of-view data for a first survey, in accordance with an embodiment of the present invention. Path data (not shown), is a type of point-of-view data, such as that recorded during the first survey. It may be for example a set of instructions (such as spoken by a vet) describing which views of the dog are required, such as front, back left side, right side. Data records 1204 are the data recorded at two capture points. At each capture point, images and point-of-view data are recorded. Here, a visible image of the right side 1212 and left side 1312 of the dog is shown alongside the respective thermographic image of the right side 1214 and left side 1314, with contours and colours in the thermographic image (not shown) indicating some medical problem, such as a hot spot indicating inflammation. Examples of point-of-view data are the thermographic camera orientation data 1208, 1308 and camera distance and/or focus settings 1210, 1310. The distance and/or focus settings may be measured for example using contrast, phase or range finding methods.

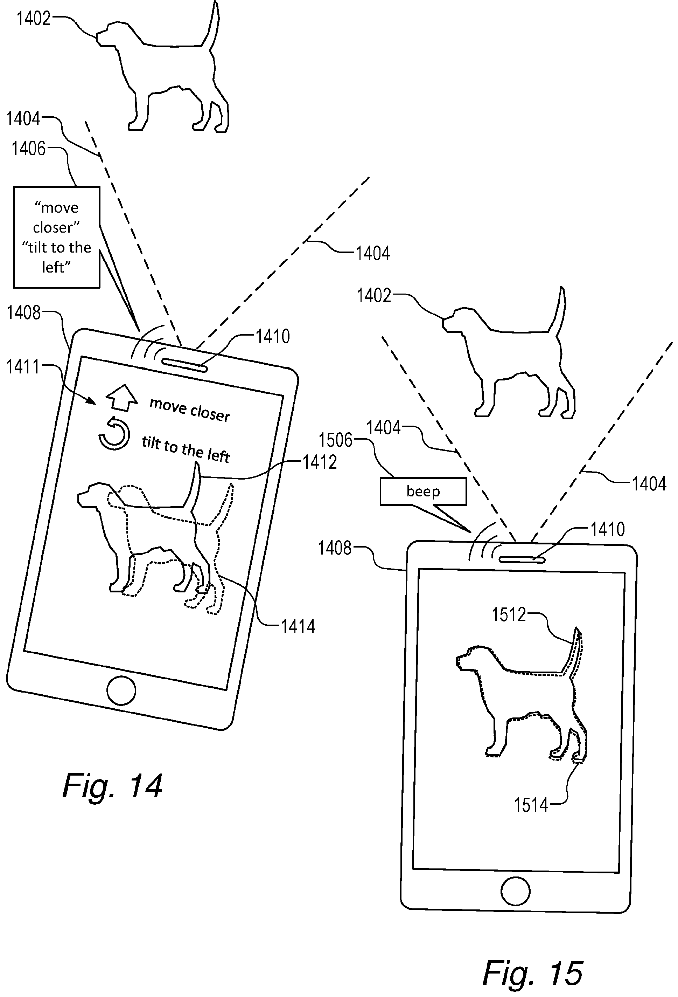

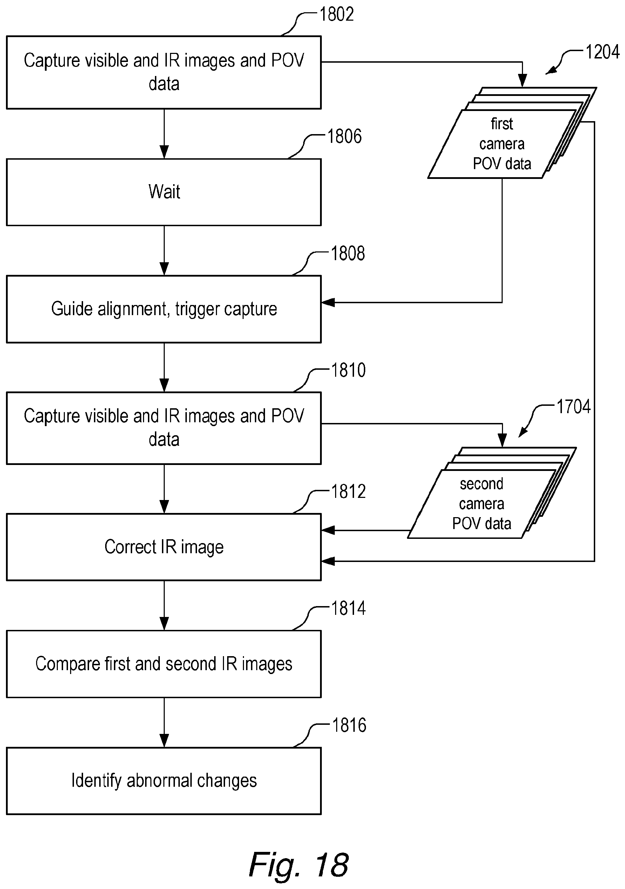

Figure 14 illustrates, in schematic form, guiding alignment of a thermographic camera, in accordance with an embodiment of the present invention. A dog 1402 is shown in the field of view 1404 of a mobile device 1408 equipped with a thermographic camera. On the display of the mobile device 1408, a real-time image of the dog 1412 is rendered overlaid on the first visible image 1414 that was captured (from point of view 1108 in Figure 11) and recorded (1312 in Figure 13) in the first survey. Guidance of alignment of the thermographic camera towards the first point of view (at which the first thermal and visible images were captured) is provided. The method is described with reference to Figure 18. In this example, a loudspeaker 1410 on the mobile device 1408 is used to output auditory guidance 1406 to the thermographic camera user. In this example the guidance is "move closer" and "tilt to the left". Furthermore, visual guidance 1411 is provided on the display of the mobile device 1408. In this example the visual guidance is textual "move closer" and "tilt to the left" and graphical with respective arrow icons.

Figure 15 illustrates, in schematic form, determining that a thermographic camera is aligned to a point of view, in accordance with an embodiment of the present invention. With reference to Figure 15, the situation is illustrated when the user has followed the guidance and achieved better alignment of the point of view of the thermographic camera to the corresponding point of view from the first survey. Reference numerals in Figure 15 which are the same as those in Figure 14 correspond to the same features. When alignment is good enough, as determined by a processor, a second thermographic image is captured and stored, along with a visible image and point-of-view data. Alternatively, or additionally, the user may determine that the alignment is good enough and may trigger the capture of the second thermographic image. The user may determine this by looking at the display. On the display, a real-time image of the dog 1402 is rendered 1512 overlaid on the first visible image 1514 that was captured and recorded in the first survey (1312 in Figure 13). In Figure 15, the alignment is more accurate than in Figure 14. Again, the detailed method is described with reference to Figure 18. In this example, the loudspeaker 1410 on the mobile device 1408 is used to output auditory confirmation 1506 of accurate alignment (here with a "beep") to the thermographic camera user. Alternatively, (not shown) a visual indication or a vibration of the mobile device may be used as confirmation of accurate alignment.

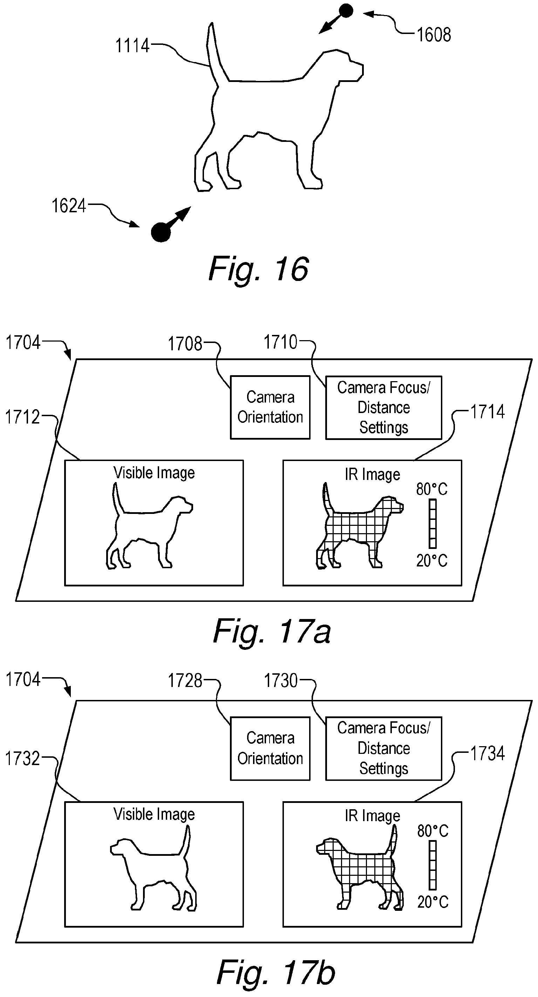

Figure 16 illustrates, in schematic form, a second survey of a dog. A second survey of the dog 1114 of Figure 11 is shown with two image capture points 1624 and 1608. In the second survey, the user of the thermographic camera is guided to capture thermographic images at these capture points, with points of view aligned to the points of view of the capture points in the first survey.

Figures 17a and 17b illustrate, in schematic form, recorded visible and thermographic images and point-of-view data of two sides of a dog for a second survey, in accordance with an embodiment of the present invention. Path data (not shown), is a type of point-of-view data, such as that recorded during the first survey. It may be for example set of instructions describing which views of the dog are required, such as front, back, left side, right side. Data record 1704 is the data recorded at two capture points. At each capture point, images and point-of-view data are recorded. Here, a visible image of the right side 1712 and left side 1732 of the dog is shown alongside the respective thermographic image of the right side 1714 and left side 1734. Differences in the thermographic images may indicate an improvement or deterioration of a medical problem in between the first and second surveys. Examples of point-of-view data are the thermographic camera orientation data 1708, 1728 and thermographic camera distance and/or focus settings 1710, 1730.

Figure 18 is a flowchart of a method according to an embodiment of the present invention. Reference is also made to features discussed in previous Figures 10 to 17. In this example a survey of a dog is performed.

Step 1802 involves capturing and recording a first thermographic image 314 of an object 226 from a first point of view 222 relative to the object 226. In this example, the object comprise a dog, which is an example of an animal.

Step 1802 also involves capturing and recording first point-of-view data 1204 corresponding to the point of view 1124. The point-of-view data may comprise camera orientation data 1208 representing orientation of a thermographic camera when used to capture the respective thermographic image. The point-of-view data may comprise camera distance and/or focus data 1210 representing for example subject distance or focus settings of a thermographic camera when used to capture the respective thermographic image.

The step 1802 may be repeated at a plurality of points of view along a first path (not shown) during a first survey, as shown in Figure 11, where the path represents a change in relative position between the dog and the point of view of thermographic camera. For example, the user may walk on a path around to the other side of the dog. Or, the path may be the rotation of the dog to provide the different point of view. The method may involves capturing and recording first point-of-view path data (nolt shown) representing the first path.

After the first survey, at step 1806, the dog may undergo treatment to improve its medical situation, or time may pass in the case of a condition monitoring uses case.

Step 1808 involves guiding alignment of a thermographic camera towards the first point of view using the recorded first point-of-view data 302 and/or 304. It may be the same or a different thermographic camera. Step 1808 also involves determining differences between real-time point-of-view data and the recorded first point-of-view data and using the differences to determine guidance indications output to the thermographic image camera user. For example, real-time point-of-view data derived from GPS and phone position/acceleration/gravity sensors can be used for absolute and dead-reckoning calculations. The course from the current position to the desired point of view can be determined automatically and indications used to communicate that to the user, who is carrying the thermographic camera apparatus. The user can then follow the guidance resulting in an improvement of the alignment of the first and second thermal images.

Guidance indications may be, for example, auditory guidance 406, such as "move closer" or "tilt to the left", or visual guidance 1411, such as textual or graphical indications. Step 1808 may also involve rendering on a display a representation of an overlay of a real-time visible image 1412 and a first visible image 1414 (for example corresponding to visible image 1312) of the dog 1114 (and 1402) captured from a point of view 1108.

Step 1808 may involve automatically comparing a real-time visible image with a first visible image 1312 of the object 1114 captured from the point of view 1108.

Step 1810 involves capturing a second thermographic image of the object. Step 1810 further comprises capturing and recording 1810 second point-of-view data 1704 corresponding to a second point of view at which the second thermographic image is captured.

This step 1810 of capturing a second thermographic image of the object may be performed automatically (in step 1808 or step 1810) based on determining that a thermographic camera is aligned to the first point of view by comparing real-time point-of-view data and the recorded first point-of-view data.

Additionally, or alternatively, the step 1810 of capturing a second thermographic image of the object is performed automatically based on determining that a thermographic camera is aligned to the first point of view by comparing real-time thermographic images and the first thermographic image 1314.

Additionally, or alternatively, the step 1810 of capturing a second thermographic image of the object is performed automatically based on determining that the camera is aligned to the first point of view by comparing real-time visible images and a visible image 1312 of the object 1114 captured from the first point of view 1108.

Additionally, or alternatively, the step 1810 of capturing a second thermographic image of the object comprises capturing a burst (rapid still image sequence or video sequence) of thermographic images and capturing burst point-of-view data, corresponding to the point of view at which the burst of thermographic images are captured, and selecting or determining the second thermographic image from the burst of thermographic images by comparing the burst point-of-view data and the recorded first point-of-view data.

Additionally, or alternatively, the step 1810 of capturing a second thermographic image of the object comprises capturing a burst of thermographic images and selecting or determining the second thermographic image from the burst of thermographic images by comparing burst thermographic images and the first thermographic image 1314.

Additionally, or alternatively, the step 1810 of capturing a second thermographic image of the object comprises capturing a burst of thermographic and visible images and selecting or determining the second thermographic image from the burst of thermographic images by comparing burst visible images and a visible image 1312 of the object 1114 captured from the point of view 1118.

Additionally, or alternatively, the recorded first point-of-view data 1308, 1310 may be used to set thermographic image camera settings to capture the second thermographic image. For example, the camera orientation data 1308 may be used to set the image rotation setting of the thermographic camera. As another example, the camera distance and/or focus data 1310 may be used to fix the focus setting of the thermographic camera.

Steps 1812 and 1814 involves determining a difference between the first 1314 and second 1734 thermographic images. In this example, this involves at step 1814 comparing first ("before") 1314 and second ("after") 1734 thermographic images. The step of determining a difference between the first 1314 and second 1734 thermographic images may be corrected, at step 1812, using the first 1308, 1310 and second 1728, 1730 point-of-view data. For example, the intensity of the first or second thermographic image may be normalised. As a further example, the first or second thermographic image may be transformed in order to more easily compare them.

The method may further comprise repeating the steps of guiding alignment 1808, capturing 1810 a second thermographic image and determining 1814 a difference between the first and second thermographic images for each of the plurality of points of view during a second survey (described with reference to Figure 16).

Step 1816 involves identifying abnormal changes (in a health monitoring use case) or identifying improvements (in a treatment monitoring use case) based on the determined (at step 1814) difference between the first and second thermographic images corresponding to the plurality of points of view. Thus it involves determining a change of the dog's body based on the determined difference between the first and second thermographic images. This uses first and second path point-of-view data to confirm that all views of the dog have been imaged.

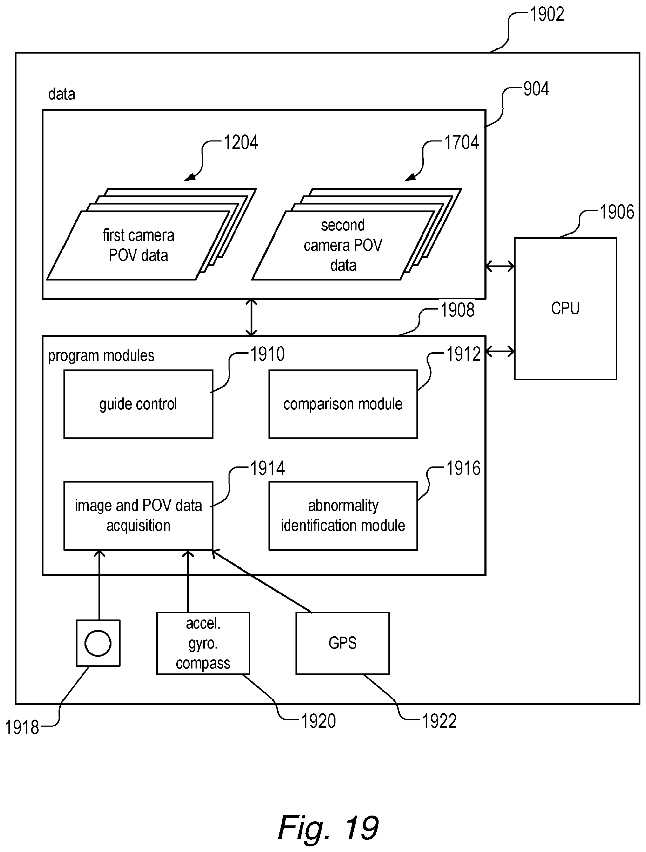

Figure 19 illustrates, in schematic form, a mobile device incorporating a thermographic camera and software, in accordance with an embodiment of the present invention. Embodiments may be implemented as a computer program product, such as software, comprising machine readable instructions for causing a thermographic imaging camera apparatus to perform the steps of a method described with reference to Figures 11 to 18. With reference to Figure 19, reference numerals which are the same as in previous figures relate to the same features. In the mobile device 1902, data memory 1904 stores point-of-view data. This may include recorded first and second path data (not shown). It also stores recorded first 1204 and second 1704 camera point-of-view data. Program memory 1908 stores program modules which are executed on the central processing unit (CPU) 1906. The guide control module 1910 when executed implements step 1808 of Figure 18. The comparison module 1912 when executed implements step 1814 of Figure 18. The image and point-of-view data acquisition module 1914 when executed implement the steps in Figure 18 related to capturing images and point-of-view data 1802, 1804 and 810. Module 1914 captures images from and receives inputs from the mobile device accelerometers, gyroscope and compass 1920 as well as the integrated GPS (global positioning system) unit 1922. The abnormality identification module 1916 when executed implements step 1816 of Figure 18.

## Claims

1. A computer-implemented method of repeat thermography, the method comprising the steps:
- capturing (802) and recording a first thermographic image (314) of an object (226) from a first point of view (222) relative to the object, and capturing and recording first point-of-view data (304) corresponding to the first point of view;
- guiding (808) alignment of a thermographic camera towards the first point of view using the recorded first point-of-view data;
- capturing (810) a second thermographic image of the object, and capturing and recording second point-of-view data (704, 702) corresponding to a second point of view (622) at which the second thermographic image (714) is captured;
- determining (814) a difference between the first and second thermographic images, wherein the step of capturing (802) and recording the first thermographic image of an object and the first point-of-view data is repeated at a plurality of points of view along a first path (210) during a first survey (202) and wherein the recorded first point-of-view data comprises first point-of-view path data (302) representing the first path and comprising a first sequence of coordinates in three-dimensional space; and
- repeating the steps of guiding (808) alignment, capturing (810) a second thermographic image and capturing and recording second point-of-view data and determining (814) a difference between the first and second thermographic images for each of the plurality of points of view along a second path (610) during a second survey (602),
wherein the recorded second point-of-view data (704, 702) comprises second point-of-view path data (702) representing the second path (610) and comprising a second sequence of coordinates in three-dimensional space, and the method further comprises the step:
- using the recorded first point-of-view path data (302) to guide a user to follow the first path for the second survey, so as to use the same points of view as the first survey; and
**characterised by** the method further comprises the step:
after the second survey (602), using the first sequence of coordinates and the second sequence of coordinates to confirm that all objects along the first path have had thermographic images captured in the first and second surveys.

2. The method of claim 1, wherein the objects comprise components of a heating system and the method further comprises calculating (816) an energy efficiency of the heating system based on the determined difference between the first and second thermographic images corresponding to the plurality of points of view.

3. The method of claim 1 or claim 2, wherein the objects comprise components of a building and the method further comprises calculating (816) an energy efficiency of the building based on the determined difference between the first and second thermographic images corresponding to the plurality of points of view.

4. The method of any preceding claim, wherein the step of determining a difference between the first and second thermographic images is corrected using the first and second point-of-view data.

5. The method of any preceding claim further comprising using the recorded first point-of-view data (304) to set thermographic image camera settings to capture the second thermographic image.

6. The method of any preceding claim, wherein the object comprises a human or animal body and the method further comprises determining a change of the body based on the determined difference between the first and second thermographic images.

7. The method of any preceding claim, wherein the point-of-view data comprises camera location data representing location of a thermographic camera when used to capture the respective thermographic image.

8. The method of any preceding claim, wherein the point-of-view data comprises camera orientation data representing orientation of a thermographic camera when used to capture the respective thermographic image.

9. The method of any preceding claim, wherein the point-of-view data comprises camera focus data representing distance and/or focus settings of a thermographic camera when used to capture the respective thermographic image.

10. A computer program product comprising machine readable instructions which, when the program is executed by a thermographic imaging camera apparatus, cause the thermographic imaging camera apparatus to perform the steps of a method as claimed in any preceding claim.

11. A thermographic imaging camera apparatus for repeat thermography, the apparatus comprising:
- a thermographic camera (1918); and
- a processor (1906) configured to:
- capture (802) and record a first thermographic image (314) of an object (226) from a first point of view (222) relative to the object, and capture and record first point-of-view data (304) corresponding to the first point of view;
- guide (808) alignment of the thermographic camera towards the first point of view using the recorded first point-of-view data;
- capture (810) a second thermographic image of the object, and capture and record second point-of-view data (704) corresponding to a second point of view (622) at which the second thermographic image (714) is captured;
- determine (814) a difference between the first and second thermographic images wherein the step of capturing (802) and recording the first thermographic image of an object and the first point-of-view data is repeated at a plurality of points of view along a first path (210) during a first survey (202) and wherein the recorded first point-of-view data comprises first point-of-view path data (302) representing the first path and comprising a first sequence of coordinates in three-dimensional space;
- repeat guiding (808) alignment, capturing (810) a second thermographic image and capturing and recording second point-of-view data and determining (814) a difference between the first and second thermographic images for each of the plurality of points of view along a second path (610) during a second survey (602),
wherein the recorded second point-of-view data (704, 702) comprises second point-of-view path data (702) representing the second path (610) and comprising a second sequence of coordinates in three-dimensional space, and the processor (1906) is further configured to:
- use the recorded first point-of-view path data (302) to guide a user to follow the first path for the second survey, so as to use the same points of view as the first survey; and
**characterised in that** the processor (1906) is further configured to:
- after the second survey (602), use the first sequence of coordinates and the second sequence of coordinates to confirm that all objects along the first path have had thermographic images captured in the first and second surveys.

12. The apparatus of claim 11, wherein the objects comprise components of a heating system and the processor is further configured to calculate (816) an energy efficiency of the heating system based on the determined difference between the first and second thermographic images corresponding to the plurality of points of view.

13. The apparatus of claim 11 or claim 12, wherein the objects comprise components of a building and the processor is further configured to calculate (816) an energy efficiency of the building based on the determined difference between the first and second thermographic images corresponding to the plurality of points of view.

14. The apparatus of claim 11, wherein the processor is configured to execute the method of any of claims 4 to 9.

## Patentansprüche

1. Computergestütztes Verfahren einer Wiederholungsthermografie, wobei das Verfahren die folgenden Schritte umfasst:
- Erfassen (802) und Aufzeichnen eines ersten thermografischen Bildes (314) eines Objekts (226) von einem ersten Blickpunkt (222) in Bezug auf das Objekt, und Erfassen und Aufzeichnen von ersten Blickpunktdaten (304), die dem ersten Blickpunkt entsprechen;
- Führen (808) einer Ausrichtung einer thermografischen Kamera in Richtung auf den ersten Blickpunkt unter Verwendung der aufgezeichneten ersten Blickpunktdaten;
- Erfassen (810) eines zweiten thermografischen Bildes des Objekts, und Erfassen und Aufzeichnen von zweiten Blickpunktdaten (704, 702), die einem zweiten Blickpunkt (622) entsprechen, an dem das zweite thermografische Bild (714) erfasst wurde;
- Ermitteln (814) einer Differenz zwischen dem ersten und dem zweiten thermografischen Bild, wobei der Schritt des Erfassens (802) und Aufzeichnens des ersten thermografischen Bildes eines Objekts und der ersten Blickpunktdaten an einer Vielzahl von Blickpunkten entlang eines ersten Wegs (210) während einer ersten Untersuchung (202) wiederholt wird und wobei die aufgezeichneten ersten Blickpunktdaten erste Blickpunktwegdaten (302) umfassen, die den ersten Weg repräsentieren und eine erste Sequenz von Koordinaten in einem dreidimensionalen Raum umfassen; und
- Wiederholen der Schritte des Führens (808) einer Ausrichtung, des Erfassens (810) eines zweiten thermografischen Bildes und des Erfassens und des Aufzeichnens der zweiten Blickpunktdaten und des Ermittelns (814) einer Differenz zwischen dem ersten und dem zweiten thermografischen Bild für jeden aus der Vielzahl von Blickpunkten entlang eines zweiten Wegs (610) während einer zweiten Untersuchung (602),
wobei die aufgezeichneten zweiten Blickpunktdaten (704, 702) zweite Blickpunktwegdaten (702) umfassen, die den zweiten Weg (610) repräsentieren und die eine zweite Sequenz von Koordinaten in einem dreidimensionalen Raum umfassen, und wobei das Verfahren ferner den folgenden Schritt umfasst:
- Verwenden der aufgezeichneten ersten Blickpunktdaten (302), um einen Benutzer so zu führen, dass er für die zweite Untersuchung dem ersten Weg folgt, um die gleichen Blickpunkte wie bei der ersten Untersuchung zu verwenden; und
**dadurch gekennzeichnet, dass** das Verfahren ferner den folgenden Schritt umfasst:
nach der zweiten Untersuchung (602), Verwenden der ersten Sequenz von Koordinaten und der zweiten Sequenz von Koordinaten, um zu bestätigen, dass von allen Objekten entlang des ersten Wegs thermografische Bilder in der ersten und der zweiten Untersuchung erfasst wurden.

2. Verfahren nach Anspruch 1, wobei die Objekte Komponenten eines Heizsystems umfassen und wobei das Verfahren ferner ein Berechnen (816) einer Energieeffizienz des Heizsystems basierend auf der ermittelten Differenz zwischen den ersten und den zweiten thermografischen Bildern umfasst, die der Vielzahl von Blickpunkten entsprechen.

3. Verfahren nach Anspruch 1 oder Anspruch 2, wobei die Objekte Komponenten eines Gebäudes umfassen und wobei das Verfahren ferner ein Berechnen (816) einer Energieeffizienz des Gebäudes basierend auf der ermittelten Differenz zwischen den ersten und den zweiten thermografischen Bildern umfasst, die der Vielzahl von Blickpunkten entsprechen.

4. Verfahren nach einem der vorhergehenden Ansprüche, wobei der Schritt des Ermittelns einer Differenz zwischen den ersten und den zweiten thermografischen Bildern unter Verwendung der ersten und der zweiten Blickpunktdaten korrigiert wird.

5. Verfahren nach einem der vorhergehenden Ansprüche, das ferner ein Verwenden der aufgezeichneten ersten Blickpunktdaten (304) umfasst, um die Kameraeinstellungen für die thermografischen Bilder so einzustellen, dass das zweite thermografische Bild erfasst wird.

6. Verfahren nach einem der vorhergehenden Ansprüche, wobei das Objekt einen Menschen- oder einen Tierkörper umfasst und wobei das Verfahren ein Ermitteln einer Veränderung des Körpers basierend auf der ermittelten Differenz zwischen den ersten und den zweiten thermografischen Bildern umfasst.

7. Verfahren nach einem der vorhergehenden Ansprüche, wobei die Blickpunktdaten Kameraortsdaten umfassen, die einen Ort einer thermografischen Kamera repräsentieren, wenn sie verwendet wird, um das jeweilige thermografische Bild zu erfassen.

8. Verfahren nach einem der vorhergehenden Ansprüche, wobei die Blickpunktdaten Kameraausrichtungsdaten umfassen, die eine Ausrichtung einer thermografischen Kamera repräsentieren, wenn sie verwendet wird, um das jeweilige thermografische Bild zu erfassen.

9. Verfahren nach einem der vorhergehenden Ansprüche, wobei die Blickpunktdaten Kamerafokusdaten umfassen, die Distanz- und/oder Fokuseinstellungen einer thermografischen Kamera repräsentieren, wenn sie verwendet wird, um das jeweilige thermografische Bild zu erfassen.

10. Computerprogrammprodukt, das maschinenlesbare Anweisungen umfasst, die, wenn das Programm von einer Einrichtung einer thermografischen Bilderfassungskamera ausgeführt wir, die Einrichtung einer thermografischen Bilderfassungskamera veranlassen, die Schritte eines Verfahrens nach einem der vorhergehenden Ansprüche durchzuführen.

11. Einrichtung einer thermografischen Bilderfassungskamera für eine Wiederholungsthermografie, wobei die Einrichtung umfasst:
- eine thermografische Kamera (1918); und
- einen Prozessor (1906), der konfiguriert ist zum:
- Erfassen (802) und Aufzeichnen eines ersten thermografischen Bildes (314) eines Objekts (226) von einem ersten Blickpunkt (222) in Bezug auf das Objekt, und Erfassen und Aufzeichnen von ersten Blickpunktdaten (304), die dem ersten Blickpunkt entsprechen;
- Führen (808) einer Ausrichtung der thermografischen Kamera in Richtung auf den ersten Blickpunkt unter Verwendung der aufgezeichneten ersten Blickpunktdaten;
- Erfassen (810) eines zweiten thermografischen Bildes des Objekts, und Erfassen und Aufzeichnen von zweiten Blickpunktdaten (704), die einem zweiten Blickpunkt (622) entsprechen, an dem das zweite thermografische Bild (714) erfasst wurde;
- Ermitteln (814) einer Differenz zwischen dem ersten und dem zweiten thermografischen Bild, wobei der Schritt des Erfassens (802) und Aufzeichnens des ersten thermografischen Bildes eines Objekts und der ersten Blickpunktdaten an einer Vielzahl von Blickpunkten entlang eines ersten Wegs (210) während einer ersten Untersuchung (202) wiederholt wird und wobei die aufgezeichneten ersten Blickpunktdaten erste Blickpunktwegdaten (302) umfassen, die den ersten Weg repräsentieren und eine erste Sequenz von Koordinaten in einem dreidimensionalen Raum umfassen;
- Wiederholen des Führens (808) einer Ausrichtung, des Erfassens (810) eines zweiten thermografischen Bildes und des Erfassens und des Aufzeichnens der zweiten Blickpunktdaten und des Ermittelns (814) einer Differenz zwischen den ersten und den zweiten thermografischen Bildern für jeden aus der Vielzahl von Blickpunkten entlang eines zweiten Wegs (610) während einer zweiten Untersuchung (602),
wobei die aufgezeichneten zweiten Blickpunktdaten (704, 702) zweite Blickpunktwegdaten (702) umfassen, die den zweiten Weg (610) repräsentieren und die eine zweite Sequenz von Koordinaten in einem dreidimensionalen Raum umfassen, und wobei der Prozessor (1906) ferner konfiguriert ist zum:
- Verwenden der aufgezeichneten ersten Blickpunktdaten (302), um einen Benutzer so zu führen, dass er für die zweite Untersuchung dem ersten Weg folgt, um die gleichen Blickpunkte wie bei der ersten Untersuchung zu verwenden; und
**dadurch gekennzeichnet, dass** der Prozessor (1906) ferner konfiguriert ist zum:
- nach der zweiten Untersuchung (602), Verwenden der ersten Sequenz von Koordinaten und der zweiten Sequenz von Koordinaten, um zu bestätigen, dass von allen Objekten entlang des ersten Wegs thermografische Bilder in der ersten und der zweiten Untersuchung erfasst wurden.

12. Einrichtung nach Anspruch 11, wobei die Objekte Komponenten eines Heizsystems umfassen und wobei der Prozessor ferner konfiguriert ist zum Berechnen (816) einer Energieeffizienz des Heizsystems basierend auf der ermittelten Differenz zwischen den ersten und den zweiten thermografischen Bildern, die der Vielzahl von Blickpunkten entsprechen.

13. Einrichtung nach Anspruch 11 oder Anspruch 12, wobei die Objekte Komponenten eines Gebäudes umfassen und wobei der Prozessor ferner konfiguriert ist zum Berechnen (816) einer Energieeffizienz des Gebäudes basierend auf der ermittelten Differenz zwischen den ersten und den zweiten thermografischen Bildern umfasst, die der Vielzahl von Blickpunkten entsprechen.

14. Einrichtung nach Anspruch 11, wobei der Prozessor konfiguriert ist zum Ausführen des Verfahrens nach einem der Ansprüche 4 bis 9.

## Revendications

1. Procédé de thermographie répétée mis en œuvre par ordinateur, le procédé comprenant les étapes suivantes :
- capturer (802) et enregistrer une première image thermographique (314) d'un objet (226) à partir d'un premier point de vue (222) par rapport à l'objet, et capturer et enregistrer des premières données de point de vue (304) correspondant au premier point de vue ;
- guider (808) l'alignement d'une caméra thermographique vers le premier point de vue à l'aide des premières données de point de vue enregistrées ;
- capturer (810) une deuxième image thermographique de l'objet, et capturer et enregistrer des deuxièmes données de point de vue (704, 702) correspondant à un deuxième point de vue (622) auquel la deuxième image thermographique (714) est capturée ;
- déterminer (814) une différence entre les première et deuxième images thermographiques, où l'étape comprenant de capturer (802) et d'enregistrer la première image thermographique d'un objet et les premières données de point de vue est répétée à une pluralité de points de vue le long d'un premier trajet (210) pendant un premier relevé (202), et où les premières données de point de vue enregistrées comprennent des données de trajet de premier point de vue (302) représentant le premier trajet et comprenant une première séquence de coordonnées dans un espace tridimensionnel ; et
- répéter les étapes comprenant de guider (808) l'alignement, de capturer (810) une deuxième image thermographique et de capturer et d'enregistrer des deuxièmes données de point de vue et de déterminer (814) une différence entre les première et deuxième images thermographiques pour chacun des multiples points de vue le long d'un deuxième trajet (610) pendant un deuxième relevé (602),
où les deuxièmes données de point de vue enregistrées (704, 702) comprennent des deuxièmes données de trajet de point de vue (702) représentant le deuxième trajet (610) et comprenant une deuxième séquence de coordonnées dans l'espace tridimensionnel, et le procédé comprend en outre l'étape suivante :
- utiliser les premières données de trajet de point de vue enregistrées (302) pour guider un utilisateur afin qu'il suive le premier trajet pour le deuxième relevé, de manière à utiliser les mêmes points de vue que le premier relevé ; et
**caractérisé en ce que** le procédé comprend en outre l'étape suivante :
après le deuxième relevé (602), utiliser la première séquence de coordonnées et la deuxième séquence de coordonnées pour confirmer que tous les objets situés le long du premier trajet ont fait l'objet d'images thermographiques capturées lors des premier et deuxième relevés.

2. Procédé selon la revendication 1, dans lequel les objets comprennent des composants d'un système de chauffage et le procédé comprend en outre de calculer (816) une efficacité énergétique du système de chauffage sur la base de la différence déterminée entre les première et deuxième images thermographiques correspondant à la pluralité de points de vue.

3. Procédé selon la revendication 1 ou la revendication 2, dans lequel les objets comprennent des composants d'un bâtiment et le procédé comprend en outre de calculer (816) une efficacité énergétique du bâtiment sur la base de la différence déterminée entre les première et deuxième images thermographiques correspondant à la pluralité de points de vue.

4. Procédé selon l'une quelconque des revendications précédentes, dans lequel l'étape de détermination d'une différence entre les première et deuxième images thermographiques est corrigée à l'aide des premières et deuxièmes données de point de vue.

5. Procédé selon l'une quelconque des revendications précédentes, comprenant en outre l'utilisation des premières données de point de vue enregistrées (304) pour régler les paramètres de la caméra d'images thermographiques afin de capturer la deuxième image thermographique.

6. Procédé selon l'une quelconque des revendications précédentes, dans lequel l'objet comprend un corps humain ou animal et le procédé comprend en outre la détermination d'un changement du corps sur la base de la différence déterminée entre les première et deuxième images thermographiques.

7. Procédé selon l'une quelconque des revendications précédentes, dans lequel les données de point de vue comprennent des données de localisation de caméra représentant la localisation d'une caméra thermographique lorsqu'elle est utilisée pour capturer l'image thermographique respective.

8. Procédé selon l'une quelconque des revendications précédentes, dans lequel les données de point de vue comprennent des données d'orientation de caméra représentant l'orientation d'une caméra thermographique lorsqu'elle est utilisée pour capturer l'image thermographique respective.

9. Procédé selon l'une quelconque des revendications précédentes, dans lequel les données de point de vue comprennent des données de mise au point de caméra représentant la distance et/ou les réglages de mise au point d'une caméra thermographique lorsqu'elle est utilisée pour capturer l'image thermographique respective.

10. Produit logiciel comprenant des instructions lisibles par machine qui, lorsque le programme est exécuté par un appareil de caméra d'imagerie thermographique, amènent l'appareil de caméra d'imagerie thermographique à exécuter les étapes d'un procédé selon l'une quelconque des revendications précédentes.

11. Appareil de caméra d'imagerie thermographique pour thermographie répétée, l'appareil comprenant :
- une caméra thermographique (1918) ; et
- un processeur (1906) configuré pour :
- capturer (802) et enregistrer une première image thermographique (314) d'un objet (226) à partir d'un premier point de vue (222) par rapport à l'objet, et capturer et enregistrer des premières données de point de vue (304) correspondant au premier point de vue ;
- guider (808) l'alignement de la caméra thermographique vers le premier point de vue à l'aide des premières données de point de vue enregistrées ;
- capturer (810) une deuxième image thermographique de l'objet, et capturer et enregistrer des deuxièmes données de point de vue (704) correspondant à un deuxième point de vue (622) auquel la deuxième image thermographique (714) est capturée ;
- déterminer (814) une différence entre les première et deuxième images thermographiques, où l'étape comprenant de capturer (802) et d'enregistrer la première image thermographique d'un objet et les premières données de point de vue est répétée à une pluralité de points de vue le long d'un premier trajet (210) pendant un premier relevé (202), et où les premières données de point de vue enregistrées comprennent des données de trajet de premier point de vue (302) représentant le premier trajet et comprenant une première séquence de coordonnées dans un espace tridimensionnel ;
- répéter le guidage (808) de l'alignement, la capture (810) d'une deuxième image thermographique et la capture et l'enregistrement des deuxièmes données de point de vue et la détermination (814) d'une différence entre les première et deuxième images thermographiques pour chacun des multiples points de vue le long d'un deuxième trajet (610) pendant un deuxième balayage (602),
où les données de deuxième point de vue enregistrées (704, 702) comprennent des données de trajet de deuxième point de vue (702) représentant le deuxième trajet (610) et comprenant une deuxième séquence de coordonnées dans l'espace tridimensionnel, et le processeur (1906) est en outre configuré pour :
- utiliser les données de trajet de premier point de vue enregistrées (302) pour guider un utilisateur afin qu'il suive le premier trajet pour le deuxième balayage, de manière à utiliser les mêmes points de vue que le premier balayage ; et
**caractérisé en ce que** le processeur (1906) est en outre configuré pour :
- après le deuxième relevé (602), utiliser la première séquence de coordonnées et la deuxième séquence de coordonnées pour confirmer que tous les objets situés le long du premier trajet ont fait l'objet d'images thermographiques capturées lors des premier et deuxième relevés.

12. Appareil selon la revendication 11, dans lequel les objets comprennent des composants d'un système de chauffage et le processeur est en outre configuré pour calculer (816) une efficacité énergétique du système de chauffage sur la base de la différence déterminée entre les première et deuxième images thermographiques correspondant à la pluralité de points de vue.

13. Appareil selon la revendication 11 ou la revendication 12, dans lequel les objets comprennent des composants d'un bâtiment et le processeur est en outre configuré pour calculer (816) une efficacité énergétique du bâtiment sur la base de la différence déterminée entre les première et deuxième images thermographiques correspondant à la pluralité de points de vue.

14. Appareil selon la revendication 11, dans lequel le processeur est configuré pour exécuter le procédé selon l'une quelconque des revendications 4 à 9.
